# EUROPÄISCHE PATENTSCHRIFT

(11) **EP 3 941 973 B1**
(45) Veröffentlichungstag und Bekanntmachung des Hinweises auf die Patenterteilung: **08.04.2026**
(21) Anmeldenummer: 20707400.6
(22) Anmeldetag: 26.02.2020
(51) Int. Cl.: C08J 11/04, B29C 48/385, B29C 48/92, B29K 105/26, B29C 48/44, B29C 48/275, B29C 48/76

(54) **ANORDNUNG UND VERFAHREN ZUM AUFWERTEN VON KUNSTSTOFFEN**
ARRANGEMENT AND METHOD FOR UPGRADING PLASTICS
ENSEMBLE ET PROCÉDÉ PERMETTANT DE VALORISER DES PLASTIQUES

(30) Priorität: 19.03.2019 DE 102019203689
(43) Veröffentlichungstag der Anmeldung: 26.01.2022
(73) Patentinhaber: Robert Bosch GmbH, 70442 Stuttgart (DE)
(72) Erfinder: APELT, Stefan, 70839 Gerlingen (DE); BAHROUN, Karim, 72663 Grossbettlingen (DE)
(86) Internationale Anmeldenummer: PCT/EP2020/054973
(87) Internationale Veröffentlichungsnummer: WO 2020/187534

(56) Entgegenhaltungen:
- WO-A1-2018/140884
- US-B2- 7 137 802

## Beschreibung

Die Erfindung betrifft eine Anordnung zum Aufwerten von gebrauchten Kunststoffen mit einer ersten Compoundiervorrichtung zur Herstellung eines Rezyklats, mit einer Sensoreinrichtung zum Erfassen von physikalischen Eigenschaften des Rezyklats und mit einer Auswerteeinrichtung zur Auswertung der Eigenschaften und zur Definition von Korrekturmaßnahmen an dem Rezyklat. Die Erfindung betrifft auch ein Verfahren zum Aufwerten von gebrauchten Kunststoffen mit der Anordnung.

### Stand der Technik

Aus Gründen der Rohstoffeinsparung, des Umweltschutzes und der Abfallverwertung werden Kunststoffbauteile oftmals der Wiederverwertung zugeführt und aufbereitet, um daraus neue Kunststoffprodukte zu fertigen. Bekannt ist es, ein Upcycling des gebrauchten Kunststoffs durchzuführen, um dessen Eigenschaften aufzuwerten und um wieder hochwertige Produkte daraus herstellen zu können.

Beispielsweise beschreibt die Druckschrift EP 1 484 146 B1, die wohl den nächstliegenden Stand der Technik bildet, ein System zum Recyceln eines gebrauchten Kunststoffmaterials als Harzmaterial. Das System umfasst Mittel zum Regenerieren und/oder Wiedererlangen einer erwünschten Eigenschaft, Mittel zum Messen einer physikalischen Eigenschaft des regenerierten Kunststoffs und Mittel zum Anzeigen der gemessenen physikalischen Eigenschaft zur Qualitätssicherung.

Die US 7 137 802 B2 offenbart eine Vorrichtung zur Aufbereitung von thermoplastischem Kunststoffmaterial.

Die WO 2018/140884 A1 offenbart ein Verfahren zur Herstellung von Kunststofffilamenten.

### Offenbarung der Erfindung

Es wird eine Anordnung zum Aufwerten von gebrauchten Kunststoffen mit den Merkmalen des Anspruchs 1 und ein Verfahren zum Aufwerten von gebrauchten Kunststoffen mit den Merkmalen des Anspruchs 6 vorgeschlagen. Bevorzugte oder vorteilhafte Ausführungsformen der Erfindung ergeben sich aus den Unteransprüchen der nachfolgenden Beschreibung und/oder den beigefügten Figuren.

Die Anordnung ist zum Aufwerten von gebrauchten Kunststoffen ausgebildet. Sie umfasst eine erste Compoundiervorrichtung, die zur Herstellung eines Rezyklats ausgebildet ist. Ein Rezyklat ist z.B. ein aufbereiteter Kunststoff bzw. eine aufbereitete Formmasse mit definierten Eigenschaften. Insbesondere wurde der gebrauchte Kunststoff vor der Aufbereitung zu dem Rezyklat bereits zu einem Produkt verarbeitetet.

Die erste Compoundiervorrichtung ist dazu ausgebildet, Compoundieroperationen an den gebrauchten Kunststoffen durchzuführen und insbesondere dadurch das Rezyklat herzustellen. Insbesondere werden die gebrauchten Kunststoffe im Rahmen der Compoundieroperationen gefördert, aufgeschmolzen, dispergiert, gemischt, entgast und druckbelastet, um als Endprodukt des Compoundierprozesses das Rezyklat zu erhalten.

Die Anordnung umfasst eine Sensoreinrichtung, die dazu ausgebildet ist, physische Eigenschaften des Rezyklats zu erfassen. Die Sensoreinrichtung kann mindestens eine, bevorzugt mehrere Messsonden umfassen. Die mindestens eine Messsonde ist z.B. als ein On-line Rheometer, als eine spektroskopische Sonde, als ein Mikrowellenmessgerät und/oder als ein Ultraschallmesskopf ausgebildet.

Es handelt sich bei den physikalischen Eigenschaften des Rezyklats, die erfasst werden können, um ein spektrometrisches Absorptionsvermögen, um elektromagnetische Eigenschaften, um eine Permeabilität und/oder um ein akustisches Dämpfungsverhalten des Rezyklats. Optional ergänzend ist die Sensoreinrichtung dazu ausgebildet, einen Massedruck und/oder eine Massetemperatur des in der ersten Compoundiervorrichtung herzustellenden und/oder hergestellten Recyclats zu erfassen.

Die Anordnung umfasst eine Auswerteeinrichtung, die dazu ausgebildet ist, die physikalischen Eigenschaften des Rezyklats auszuwerten. Hierzu übermittelt die Sensoreinrichtung die erfassten physikalischen Eigenschaften insbesondere als Sensordaten an die Auswerteeinrichtung.

Die Auswerteeinrichtung ist dazu ausgebildet, notwendige Korrekturmaßnahmen an dem Rezyklat zu definieren.

Erfindungsgemäß umfasst die Anordnung eine zweite Compoundiervorrichtung. Die zweite Compoundiervorrichtung ist dazu ausgebildet, ein korrigiertes, insbesondere erneut aufgewertetes Rezyklat, aus dem Rezyklat herzustellen. Vorzugsweise ist die zweite Compoundiervorrichtung dazu ausgebildet, das durch die erste Compoundiervorrichtung hergestellte Rezyklat erneut, insbesondere ein zweites Mal zu compoundieren. Insbesondere ist die zweite Compoundiervorrichtung dazu ausgebildet, einige oder alle Compoundieroperationen durchzuführen, die auch die erste Compoundiervorrichtung durchführen kann. Beispielsweise sind die erste Compoundierungsvorrichtung und/oder zweite Compoundiervorrichtung als Einschneckenextruder, als Doppelschneckenextruder, als Planetwalzenextruder oder als Kneter ausgebildet.

Vorteilhaft ist, dass das in der ersten Compoundiervorrichtung gefertigte Rezyklat einer Kontrolle im Hinblick auf die gewünschten physikalischen Eigenschaften unterzogen wird und mittels der zweiten Compoundiervorrichtung eine erneute Aufbereitung des Recyklats erfolgen kann. Insbesondere kann ein zweistufiger Compoundierprozess bereitgestellt werden, im Rahmen dessen die gebrauchten Kunststoffe zweimal aufgewertet werden, sodass insbesondere noch hochwertigere Recyklate herstellbar sind. Denn insbesondere in Folge der Nutzung des aus dem gebrauchten Kunststoff gefertigten Produkts ist dieses diversen Umwelteinflüssen ausgesetzt, was zu einer Degeneration des Kunststoffs und zu negativen Auswirkungen auf physische Eigenschaften des Produkts führen kann. Mittels der bereitgestellten Anordnung kann eine auf der Materialdegeneration basierende Unsicherheit hinsichtlich der späteren Materialeigenschaft der Recyklate überwunden werden. Im Speziellen können korrigierte Recyklate bereitgestellt werden, die die benötigten physikalischen Eigenschaften aufweisen, sodass daraus aus diesen wieder hochwertige Kunststoffteile hergestellt werden können.

In einer alternativen Ausführungsform der Erfindung ist die Auswerteeinrichtung dazu ausgebildet, die physikalischen Eigenschaften des Rezyklats als Materialeigenschaftswerte auszuwerten, wobei die Auswerteeinrichtung dazu ausgebildet ist, aus den Materialeigenschaftswerten weitere Bestimmungsgrößen zu berechnen. Bei den weiteren Bestimmungsgrößen handelt es sich um eine Schmelzviskosität, um ein Molekulargewicht, um Zuschlagsstoffe wie z.B. Fasen und/oder Additive und deren Anteile am Recyklat und/oder um Verunreinigungen durch Fremdstoffe und/oder andere Kunststoffarten und deren Anteile an Recyklat.

Eine mögliche Ausgestaltung der Erfindung sieht vor, dass die Auswerteeinrichtung dazu ausgebildet ist, eine Übereinstimmung oder Abweichung zwischen den weiteren Bestimmungsgrößen und hinterlegten Zielgrößen auszuwerten. Vorzugsweise sind die Zielgrößen für die entsprechenden Bestimmungsgrößen in der Auswerteeinrichtung hinterlegt. Insbesondere basieren die Zielgrößen auf Erfahrungswerten aus der Herstellung von Recyklaten, die die notwendigen physikalischen Eigenschaften aufweisen.

In einer weiteren bevorzugten Umsetzung der Erfindung ist die Auswerteeinrichtung dazu ausgebildet, im Falle der Abweichung die Korrekturmaßnahmen zu definieren. Vorzugsweise sind die Korrekturmaßnahmen in der zweiten Compoundiervorrichtung, insbesondere bei und/oder während der Druchführung Compoundieroperationen an dem Recyklat umsetzbar. Die Korrekturmaßnahmen umfasst beispielsweise die variable Zugabe von Additiven, z.B. Peroxide, die variable Zugabe von Frischmaterial, insbesondere Kunststoffgranulaten, und/oder das Ausschleusen mindestens eines ungeeigneten Stoffstroms, z.B. Luft, Feuchtigkeit und/oder Lösemittel.

In einer möglichen Ausführungsform der Erfindung umfasst die Anordnung eine erste Steuerungseinrichtung und eine zweite Steuerungseinrichtung. Vorzugsweise ist die erste Steuerungseinrichtung dazu ausgebildet, die erste Compoundiervorrichtung zur Durchführung der Compoundieroperationen anzusteuern. Bevorzugt ist die zweite Steuerungseinrichtung dazu ausgebildet, die zweite Compoundiervorrichtung zur Durchführung der Compoundieroperationen anzusteuern. Insbesondere ist die zweite Steuerungseinrichtung dazu ausgebildet die zweite Compoundiervorrichtung dazu anzusteuern, die Korrekturmaßnahmen durchzuführen. Beispielsweise ist die zweite Compoundiervorrichtung dazu ansteuerbar, die in der zweiten Compoundiervorrichtung ausgeführten Compoundieroperationen entsprechend der Korrekturmaßnahmen anzupassen und/oder abzuändern.

Besonders bevorzugt ist im Rahmen der Erfindung, dass die Auswerteeinrichtung, die Sensoreinrichtung und die beiden Steuerungseinrichtungen in einem Mess- und Regelkreis für die erste und zweite Compoundiervorrichtung angeordnet sind und/oder gemeinsam den Mess- und Regelkreis bilden. Vorzugsweise ist die erste Steuerungseinrichtung, insbesondere innerhalb des Mess- und Regelkreises dazu ausgebildet, Auswertungen der Auswerteeinrichtung auf die erste Compundiervorrichtung rückzukoppeln und auf den Auswertungen basierende Compoundieroperationen anzusteuern. Insbesondere sind die Compoundieroperationen entsprechend den Abweichungen abänderbar und/oder anpassbar.

Einen weiteren Gegenstand der Erfindung bildet ein Verfahren zum Aufwerten von gebrauchten Kunststoffen mit der Anordnung nach der bisherigen Beschreibung und/oder nach einem der Ansprüche 1 bis 7.

Im Rahmen des Verfahrens wird das Rezyklat, insbesondere aus dem gebrauchten Kunststoff, gefertigt. Es werden physische Eigenschaften des Rezyklats erfasst und ausgewertet. Weiterhin werden im Rahmen des Verfahrens notwendige Korrekturmaßnahmen definiert und an dem Rezyklat durchgeführt.

Bevorzugt ist im Rahmen des Verfahrens, dass zur Herstellung des Rezyklats die erste Compoundiervorrichtung und die erste Steuerungseinrichtung bereitgestellt werden. Vorzugsweise führt die erste Compoundiervorrichtung die Compoundieroperationen zur Herstellung des Rezyklats aus den gebrauchten Kunststoffen aus. Insbesondere wird die erste Compoundiervorrichtung von der ersten Steuerungseinrichtung angesteuert, die Compoundieroperationen auszuführen.

Vorzugsweise wird zur Messung der physikalischen Eigenschaften des Rezyklats die Sensoreinrichtung bereitgestellt. Insbesondere wird das Rezyklat im aufgeschmolzenen Zustand kontinuierlich der Sensoreinrichtung zur Messung der physikalischen Eigenschaften zugeführt.

Optional ergänzend wird die Auswerteeinrichtung im Rahmen des Verfahrens bereitgestellt, um die physikalischen Eigenschaften auszuwerten und die notwendigen Korrekturmaßnahmen zu definieren.

In einem möglichen Verfahrensschritt wertet die Auswerteeinrichtung die physikalischen Eigenschaften als Materialeigenschaftswerte aus und berechnet aus den Materialeigenschaftswerten die weiteren Bestimmungsgrößen. Bevorzugt werden in der Auswerteeinrichtung Zielgrößen für die Bestimmungsgrößen hinterlegt.

Ein weiterer möglicher Verfahrensschritt sieht vor, dass die Auswerteeinrichtung eine Übereinstimmung oder Abweichung zwischen den Bestimmungsgrößen und den Zielgrößen auswertet. Für den Fall, dass eine Abweichung ausgewertet wird, definiert die Auswerteeinrichtung die Korrekturmaßnahmen, insbesondere um die Abweichungen zu beheben.

In einem weiteren bevorzugten Verfahrensschritt werden die zweite Compoundiervorrichtung und die zweite Steuerungseinrichtung bereitgestellt. Vorzugsweise werden mittels der zweiten Compoundiervorrichtung die Korrekturmaßnahmen an dem Rezyklat durchgeführt. Die zweite Compoundiervorrichtung wird bevorzugt durch die zweite Steuereinrichtung dazu angesteuert, die Korrekturmaßnahmen an dem Recyklat durchzuführen. Im Speziellen fertigt die zweite Compoundierungsvorrichtung das korrigierte, insbesondere erneut aufgewertete, Recyklat.

Weitere Merkmale, Vorteile und Wirkungen der Erfindung ergeben sich aus der nachfolgenden Beschreibung bevorzugter Ausführungsbeispiele der Erfindung. Dabei zeigen:

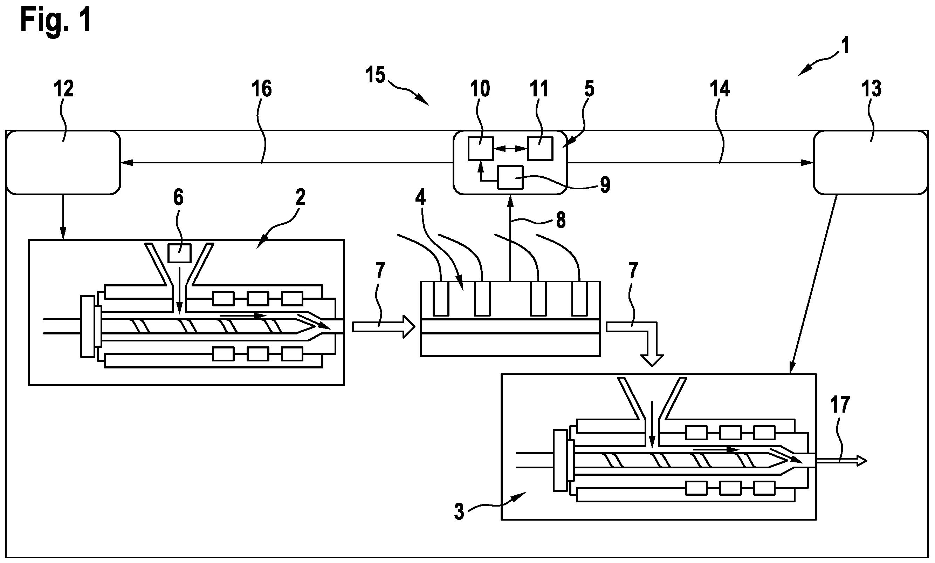

- Figur 1: eine Anordnung zum Aufwerten von gebrauchten Kunststoffen

Einander entsprechende oder gleiche Teile sind in den Figuren jeweils mit den gleichen Bezugszeichen versehen.

In der Figur 1 ist eine Anordnung 1 zum Aufwerten von gebrauchten Kunststoffen 6 dargestellt. Die gebrauchten Kunststoffe 6 sind Kunststoffe, die bereits zu einem Produkt verarbeitet wurden.

Die Anordnung 1 umfasst eine erste Compoundiervorrichtung 2, eine erste Steuerungseinrichtung 12, eine zweite Compoundiervorrichtung 3, eine zweite Steuerungseinrichtung 13, eine Sensoreinrichtung 4 und eine Auswerteeinrichtung 5.

In der ersten Compoundiervorrichtung 2 wird aus dem gebrauchten Kunststoff 6 ein Rezyklat 7 hergestellt. Als Rezyklate 7 sind aufbereitete Kunststoffe in der Gestalt einer Formmasse bezeichnet. Die Aufbereitung der gebrauchten Kunststoffe erfolgt in der ersten Compoundiervorrichtung 2 durch Compoundieroperationen wie Fördern, Aufschmelzen, Dispergieren, Mischen, Entgasen und Druckbelasten der gebrauchten Kunststoffe 6. Ziel ist es, die gebrauchten Kunststoffe 6 so aufzubereiten, dass die daraus gefertigten Rezyklate 7, d.h. der Materialstrom an der Stelle 7, definierte physikalische Eigenschaften, wie Massedruck, Massetemperatur, spektrometrisches Absorptionsvermögen, elektromagnetische Eigenschaften, Permeabilität und/oder akustisches Dämpfungsverhalten aufweisen. Die erste Steuerungseinrichtung 12 steuert die erste Compoundiervorrichtung 2 dazu an, die Compoundieroperationen durchzuführen und die gebrauchten Kunststoffe 6 dadurch zu dem Rezyklat 7 aufzuwerten.

Jedoch können die aus den Kunststoffen 6 gefertigten Produkte, durch deren Gebrauch und durch einwirkende Umwelteinflüsse degenerieren, was negative Auswirkungen auf die physikalischen Eigenschaften des Produkts nach sich ziehen kann. Der jeweilige Grad der Degeneration kann sich auf das in der ersten Compoundiervorrichtung 2 hergestellte Rezyklat 7 auswirken, sodass dessen physikalische Eigenschaften, die das Rezyklat 7 durch die Compoundieroperationen erhalten soll, von den angestrebten physikalischen Eigenschaften abweichen kann.

Um eine etwaige Abweichung festzustellen sind die Sensoreinrichtung 4 und die Auswerteeinrichtung 5 vorgesehen. Die Sensoreinrichtung 4 umfasst mehrere Messsonden, z.B. ein On-line Rheometer, eine spektroskopische Sonde, ein Mikrowellenmessgerät und/oder einen Ultraschallmesskopf, zur Erfassung der physikalischen Eigenschaften des Rezyklats 7. Dieses wird der Sensoreinrichtung 4 kontinuierlich als Formmasse zugeführt.

Die Sensoreinrichtung 4 erfasst die physikalischen Eigenschaften des Rezyklats 7 und übermittelt diese als Sensorsignale 8 an die Auswerteeinrichtung 5. Die Auswerteeinrichtung 5 wertet die auf den erfassen Eigenschaften basierenden Sensorsignale 8 als Materialeigenschaftswerte 9 aus. Aus den Materialeigenschaftswerten 9 berechnet die Auswerteeinrichtung 5 weitere Bestimmungsgrößen 10, wie z. B. eine Schmelzviskosität und/oder ein Molekulargewicht des Recyklats 7, Zuschlagsstoffe wie z. B. Fasen und/oder Additive und deren Anteile am Recyklat 7 und/oder Verunreinigungen durch Fremdstoffe und/oder durch andere Kunststoffarten und deren Anteile an Recyklat 7.

In der Auswerteeinrichtung 5 sind für die Bestimmungsgrößen 10 Zielgrößen 11 hinterlegt, die insbesondere auf Erfahrungswerten beruhen. Die Auswerteeinrichtung 5 gleicht die Bestimmungsgrößen 10 mit den Zielgrößen 11 ab und wertet zwischen diesen eine Übereinstimmung oder eine Abweichung aus.

Wenn die Auswerteeinrichtung 5 die Abweichung auswertet, definiert sie entsprechende Korrekturmaßnahmen 14 und übermittelt diese an die zweite Steuerungseinrichtung 13. Die zweite Steuerungseinrichtung 13 steuert die zweite Compoundiervorrichtung 3 dazu an, die Korrekturmaßnahmen 14 durchzuführen, insbesondere indem sie ihre Compoundieroperationen anpasst und/oder abändert. Beispielsweise werden Additive wie Peroxide oder Frischmaterial zu dem in der zweiten Compoundiervorrichtung 3 erneut compoundierten Rezyklat 7 zugegeben, es können aber auch als ungeeignet charakterisierte Stoffströme aus dem Rezyklat 7 ausgeschleust werden. Durch die Durchführung der Korrekturmaßnahmen 14 sollen die physikalischen Eigenschaften des Rezyklats 7 noch weiter verbessert werden, sodass das korrigierte Rezyklat 17 als Endprodukt gefertigt wird, das die notwendigen physikalischen Eigenschaften aufweist, um hochwertige Kunststoffteile daraus herzustellen.

Die beiden Steuerungseinrichtungen 12, 13, die Sensoreinrichtung 4 und die Auswerteeinrichtung 5 bilden einen Steuer- und Regelkreis 15 für die erste und zweite Compoundiervorrichtung 2, 3. Innerhalb des Steuer- und Regelkreises 15 erfolgt eine Rückkopplung zwischen der Auswerteeinrichtung 5 und der ersten Steuerungseinrichtung 12. In Folge der Rückkopplung reagiert die Steuerungseinrichtung 12 auf die Auswertungen der Auswerteeinrichtung 5 und steuert die erste Compoundiervorrichtung 2 bei Bedarf zu abgeänderten und/oder angepassten Compoundieroperationen bei der Herstellung des Rezyklats 7 ansteuert.

## Patentansprüche

1. Anordnung (1) zum Aufwerten von gebrauchten Kunststoffen,
mit einer ersten Compoundiervorrichtung (2) zur Herstellung eines Rezyklats (7), mit einer Sensoreinrichtung (4) zum Erfassen von physikalischen Eigenschaften des Rezyklats (7),
mit einer Auswerteeinrichtung (5) zur Auswertung der physikalischen Eigenschaften und zur Definition von Korrekturmaßnahmen (14) an dem Rezyklat (7),
und mit einer zweiten Compoundiervorrichtung (3) zur Herstellung eines korrigierten Rezyklats (17) aus dem Rezyklat (7),
**dadurch gekennzeichnet, dass** die physikalischen Eigenschaften Druck, Temperatur, spektrometrisches Absorptionsvermögen, elektromagnetische Eigenschaften, Permeabilität und/oder akustisches Dämpfungsverhalten des Rezyklats (7) umfassen und/oder dass die Auswerteeinrichtung (5) dazu ausgebildet ist, die physikalischen Eigenschaften des Rezyklats (7) als Materialeigenschaftswerte (9) auszuwerten und aus den Materialeigenschaftswerten (9) weitere Bestimmungsgrößen (10) zu berechnen, wobei die weiteren Bestimmungsgrößen eine Schmelzviskosität, ein Molekulargewicht, Zuschlagsstoffe und deren Anteile und/oder Verunreinigungen und deren Anteile des Rezyklats (7) umfassen.

2. Anordnung (1) nach Anspruch 1, **dadurch gekennzeichnet, dass** die Auswerteeinrichtung (5) dazu ausgebildet ist, eine Übereinstimmung oder Abweichung zwischen den Bestimmungsgrößen (10) und hinterlegten Zielgrößen (11) auszuwerten und im Falle der Abweichung die Korrekturmaßnahmen (14) zu definieren.

3. Anordnung (1) nach einem der vorhergehenden Ansprüche, **dadurch gekennzeichnet dass** die Anordnung (1) eine erste Steuerungseinrichtung (12) umfasst, wobei die erste Steuerungseinrichtung (12) dazu ausgebildet ist, die erste Compoundiervorrichtung (2) zur Ausführung von Compoundieroperationen anzusteuern und/oder dass die Anordnung eine zweite Steuerungseinrichtung (13) umfasst, wobei die zweite Steuerungseinrichtung (13) dazu ausgebildet ist, die zweite Compoundiervorrichtung (3) zur Durchführung der Korrekturmaßnahmen an dem Rezyklat (7) anzusteuern.

4. Anordnung (1) nach einem der vorhergehenden Ansprüche, **dadurch gekennzeichnet, dass** die Auswerteeinrichtung (5), die Sensoreinrichtung (4) und die beiden Steuerungseinrichtungen (12, 13) einen Mess- und Regelkreis (15) für die erste und zweite Compoundiervorrichtung (2, 3) bilden, wobei die erste Steuerungseinrichtung (12) dazu ausgebildet ist, Auswertungen der Auswerteeinrichtung (4) auf die erste Compoundiervorrichtung (2) rückzukoppeln und auf den Auswertungen basierende Compoundieroperationen (16) anzusteuern.

5. Anordnung (1) nach einem der vorhergehenden Ansprüche, **dadurch gekennzeichnet, dass** die Korrekturmaßnahmen (14) die variable Zugabe von Additiven, die variable Zugabe von Frischmaterial und/oder das Ausschleusen mindestens eines ungeeigneten Stoffstroms umfassen.

6. Verfahren zum Aufwerten von gebrauchten Kunststoffen (6) mit der Anordnung (1) nach einem der vorhergehenden Ansprüche, **dadurch gekennzeichnet, dass**
ein Rezyklat (7) gefertigt wird,
dass physische Eigenschaften des Rezyklats (7) erfasst werden,
dass die physikalischen Eigenschaften ausgewertet werden,
dass Korrekturmaßnahmen (14) an dem Rezyklat (7) definiert werden und dass die Korrekturmaßnahmen (14) an dem Rezyklat (7) durchgeführt werden.

7. Verfahren nach Anspruch 6, **dadurch gekennzeichnet, dass** die physikalischen Eigenschaften des Rezyklats (7) als Materialeigenschaftswerte (9) auswertet werden, dass aus den Materialeigenschaftswerten (9) weitere Bestimmungsgrößen (10) berechnet werden und dass eine Übereinstimmung oder Abweichung zwischen den Bestimmungsgrößen (10) und hinterlegten Zielgrößen (11) ausgewertet wird.

8. Verfahren nach Anspruch 7, **dadurch gekennzeichnet, dass** die Korrekturmaßnahmen (14) definiert und ausgeführt werden, wenn die Abweichung ausgewertet wurde.

## Claims

1. Arrangement (1) for upgrading used plastics,
with a first compounding device (2) for producing a recyclate (7),
with a sensor device (4) for sensing physical properties of the recyclate (7),
with an evaluation device (5) for evaluating the physical properties and for defining corrective measures (14) to be performed on the recyclate (7),
and with a second compounding device (3) for producing from the recyclate (7) a corrected recyclate (17),
**characterized in that** the physical properties comprise the pressure, temperature, spectrometric absorptivity, electromagnetic properties, permeability and/or acoustic damping behaviour of the recyclate (7) and/or **in that** the evaluation device (5) is designed to evaluate the physical properties of the recyclate (7) as material property values (9) and calculate further determinants (10) from the material property values (9),
wherein the further determinants comprise a melt viscosity, a molecular weight, added substances and the proportions thereof and/or impurities and the proportions thereof of the recyclate (7).

2. Arrangement (1) according to Claim 1, **characterized in that** the evaluation device (5) is designed to evaluate a match or mismatch between the determinants (10) and stored target values (11) and to define the corrective measures (14) in the event of the mismatch.

3. Arrangement (1) according to one of the preceding claims, **characterized in that** the arrangement (1) comprises a first control device (12), the first control device (12) being designed to activate the first compounding device (2) for performing compounding operations, and/or **in that** the arrangement comprises a second control device (13), the second control device (13) being designed to activate the second compounding device (3) for performing the corrective measures on the recyclate (7).

4. Arrangement (1) according to one of the preceding claims, **characterized in that** the evaluation device (5), the sensor device (4) and the two control devices (12, 13) form a measurement and control circuit (15) for the first and second compounding devices (2, 3), the first control device (12) being designed to feed back evaluations of the evaluation device (4) to the first compounding device (2) and to activate compounding operations (16) on the basis of the evaluations.

5. Arrangement (1) according to one of the preceding claims, **characterized in that** the corrective measures (14) comprise the variable adding of additives, the variable adding of virgin material and/or the discharging of at least one stream of unsuitable substance.

6. Method for upgrading used plastics (6) with the arrangement (1) according to one of the preceding claims, **characterized in that**
a recyclate (7) is produced,
**in that** physical properties of the recyclate (7) are sensed,
**in that** the physical properties are evaluated,
**in that** corrective measures (14) to be performed on the recyclate (7) are defined and **in that**
the corrective measures (14) are performed on the recyclate (7).

7. Method according to Claim 6, **characterized in that** the physical properties of the recyclate (7) are evaluated as material property values (9), **in that** further determinants (10) are calculated from the material property values (9) and **in that** a match or mismatch between the determinants (10) and stored target values (11) is evaluated.

8. Method according to Claim 7, **characterized in that** the corrective measures (14) are defined and carried out when the mismatch has been evaluated

## Revendications

1. Agencement (1) pour la valorisation de matières plastiques usagées,
ayant un premier dispositif de mélange (2) pour produire un produit de recyclage (7),
ayant un appareil de capteur (4) pour détecter des propriétés physiques du produit de recyclage (7),
ayant un appareil d'évaluation (5) pour évaluer les propriétés physiques et pour définir des mesures de correction (14) sur le produit de recyclage (7), et ayant un deuxième dispositif de mélange (3) pour produire un produit de recyclage corrigé (17) à partir du produit de recyclage (7),
**caractérisé en ce que** les propriétés physiques comprennent la pression, la température, la capacité d'absorption spectrométrique, les propriétés électromagnétiques, la perméabilité et/ou le comportement d'amortissement acoustique du produit de recyclage (7) et/ou **en ce que** l'appareil d'évaluation (5) est conçu pour évaluer les propriétés physiques du produit de recyclage (7) en tant que valeurs de propriétés de matériau (9) et pour calculer d'autres grandeurs de détermination (10) à partir des valeurs de propriétés de matériau (9), les autres grandeurs de détermination comprenant une viscosité à l'état fondu, une masse moléculaire, des additifs et leurs proportions et/ou des impuretés et leurs proportions du produit de recyclage (7).

2. Agencement (1) selon la revendication 1, **caractérisé en ce que** l'appareil d'évaluation (5) est conçu pour évaluer une correspondance ou un écart entre les grandeurs de détermination (10) et des grandeurs cibles mémorisées (11) et pour définir les mesures de correction (14) en cas d'écart.

3. Agencement (1) selon l'une quelconque des revendications précédentes, **caractérisé en ce que** l'agencement (1) comprend un premier appareil de commande (12), le premier appareil de commande (12) étant conçu pour commander le premier dispositif de mélange (2) pour effectuer des opérations de mélange et/ou **en ce que** l'agencement comprend un deuxième appareil de commande (13), le deuxième appareil de commande (13) étant conçu pour commander le deuxième dispositif de mélange (3) pour effectuer les mesures de correction sur le produit de recyclage (7).

4. Agencement (1) selon l'une quelconque des revendications précédentes, **caractérisé en ce que** l'appareil d'évaluation (5), l'appareil de capteur (4) et les deux appareils de commande (12, 13) forment un circuit de mesure et de régulation (15) pour le premier et le deuxième dispositif de mélange (2, 3), le premier appareil de commande (12) étant conçu pour renvoyer les évaluations de l'appareil d'évaluation (4) au premier dispositif de mélange (2) et commander des opérations de mélange (16) sur la base des évaluations.

5. Agencement (1) selon l'une quelconque des revendications précédentes, **caractérisé en ce que** les mesures de correction (14) comprennent l'addition variable d'additifs, l'addition variable de matériau frais et/ou l'évacuation d'au moins un courant de matériau inapproprié.

6. Procédé de valorisation de matières plastiques usagées (6) avec l'agencement (1) selon l'une quelconque des revendications précédentes, **caractérisé en ce que**
un produit de recyclage (7) est produit,
**en ce que** des propriétés physiques du produit de recyclage (7) sont détectées,
**en ce que** les propriétés physiques sont évaluées,
**en ce que** des mesures de correction (14) sur le produit de recyclage (7) sont définies et **en ce que** les mesures de correction (14) sont exécutées sur le produit de recyclage (7).

7. Procédé selon la revendication 6, **caractérisé en ce que** les propriétés physiques du produit de recyclage (7) sont évaluées en tant que valeurs de propriétés de matériau (9), **en ce que** d'autres grandeurs de détermination (10) sont calculées à partir des valeurs de propriétés de matériau (9) et **en ce qu'**une correspondance ou un écart entre les grandeurs de détermination (10) et des grandeurs cibles mémorisées (11) est évalué.

8. Procédé selon la revendication 7, **caractérisé en ce que** les mesures de correction (14) sont définies et exécutées lorsque l'écart a été évalué.
